# DEMANDE DE BREVET EUROPEEN

(11) **EP 0 842 988 A1**
(43) Date de publication de la demande: **20.05.1998**
(21) Numéro de dépôt: 97402695.7
(22) Date de dépôt: 12.11.1997
(51) Int. Cl.: C09B 57/10, C07F 15/02, G11B 7/24, G11B 7/00

(54) **Composés chimiques à transition de spin et dispositifs d'affichage de dépassement de seuil de température comprenant un milieu actif incluant au moins un de ces composés**

(30) Priorité: 14.11.1996 FR 9613902
(71) Demandeur: DE LA RUE CARTES ET SYSTEMES, 75013 Paris (FR)
(72) Inventeur: Kahn, Olivier, 33850 Leognan (FR); Jay-Martinez, Charlotte, 75014 Paris (FR); Garcia, Yann, 33370 Fargues-Saint-Hilaire (FR); Codjovi, Epiphane, 91650 Breuillet (FR)
(74) Mandataire: CABINET BONNET-THIRION

(57) **Abrégé**

L'invention concerne un composé chimique à transition de spin, incluant un réseau comprenant des molécules formées chacune d'un complexe métal-ligand et d'au moins un anion, et ce réseau comprenant aussi au moins une molécule d'eau liée au ligand par liaison hydrogène, dans lequel le métal est constitué par au moins un ion métallique ayant une configuration électronique en d4, d5, d6 ou d7, dans lequel le ligand est un 1,2,4 triazole substitué ayant un radical de substitution qui comprend un groupement alcool OH⁻, et dans lequel l'anion est un dérivé organique à la fois de tosilate et de nitrate.

Ce composé est à l'origine hydraté et pourpre dans son état bas spin. Il possède la propriété de changer de phase par déshydratation haut spin de l'ordre de 80°C où il prend la couleur blanche. Dans cette deuxième phase déshydratée, ses températures de transition de spin sont entre -170°C et -165°C, de sorte qu'il reste ensuite toujours blanc à température ambiante. Ce composé hydraté est utilisé pour réaliser des dispositifs marqueurs infalsifiables de première utilisation, ou d'utilisation dangereuse.
Application : Dispositifs marqueurs de dépassement de seuil de température

## Description

L'invention concerne des composés chimiques à transition de spin, et des procédés de réalisation de ces composés de départ.

L'invention concerne également des dispositifs munis de moyens d'indication de rupture de chaîne de température comprenant un milieu actif incluant au moins un de ces composés.

L'invention trouve son application dans l'industrie de fabrication de systèmes d'affichage et de dispositifs munis de ces systèmes d'affichage.

Un composé chimique à transition de spin est déjà connu de l'état de la technique par la publication "INFLUENCE OF MAGNETIC DILUTION ON SPIN TRANSITION IN THE COMPLEX OF IRON(II) NITRATE WITH 4-AMINO-1,2,4-TRIAZOLE" dans "Journal of Structural Chemistry, Vol.34, N°6, 1993", pp.960-965.

Ce document divulgue une étude de l'influence d'une dilution magnétique d'un complexe de nitrate de fer-aminotriazole avec du zinc, tel que FeₓZn₁₋ₓ(AT)₃(NO₃)₂, où la concentration x est comprise entre 1 % et 80 % et où AT signifie aminotriazole.

Un procédé de préparation des composés connus consiste à mettre en présence un sel du métal Fe SO₄, 7H₂O dans une solution d'acide ascorbique avec une solution de Ba(NO₃)₂ ce qui produit un précipité de BaSO₄ qui est séparé de la solution. Un sel du métal Zn(NO₂)₂, 6H₂O est ensuite ajouté au filtrat. La solution résultante est chauffée. Puis une solution de l'aminotriazole dans l'éthanol est ajoutée. Il en résulte un précipité qui est séché par chauffage.

Les composés décrits dans le document cité présentent une transition d'états de spin, entre un état dit bas spin (LS) et un état dit haut spin (HS) qui est induite thermiquement respectivement à des températures basse et haute. Les changements des niveaux électroniques sont accompagnés de changement de la couleur des composés.

Ainsi dans l'état bas spin (LS de l'anglais : Low-Spin) les composés sont pourpre, alors que dans l'état haut spin (HS de l'anglais : High-Spin) ces composés sont d'un blancs. Les états haut spin (HS) et bas spin (LS) sont des états stables entre lesquels se trouve un domaine de bistabilité. Le passage entre les états haut spin et bas spin se fait selon un cycle thermique d'hystérésis.

Cette étude conclut que les transitions de spin montrées par le composé sont influencées par la température, par la concentration en zinc et aussi par la présence d'eau en faible quantité dans le réseau de ce composé.

Un but de l'invention est de proposer un composé du type des composés connus, présentant des propriétés différentes de manière à pouvoir être appliqué à la réalisation d'un marqueur de première utilisation qui soit infalsifiable.

Dans ce but, un composé à transition de spin doit être stockable à la température ambiante et à cet effet doit présenter sa transition bas spin vers haut spin à une température supérieure à 323K (+50°C), concrétisé par un passage, détectable visuellement ou optiquement, de la couleur pourpre à la couleur blanc, induit thermiquement par un système spécifique chauffant ; ensuite ce composé ne doit pas pouvoir être ramené à l'état bas spin pourpre en employant des moyens couramment à la disposition du grand public tel qu'un congélateur, par exemple, pour le refroidir.

Un composé répondant à ces conditions est un composé chimique à transition de spin, incluant un réseau comprenant des molécules formées chacune d'un complexe métal-ligand, et d'un anion, et ce réseau comprenant aussi au moins une molécule d'eau liée au ligand par liaison hydrogène, réseau dans lequel le métal est constitué par un ou des ions métalliques présentant une configuration électronique en d4, d5, d6 ou d7 dans lequel le ligand est un 1-2-4 triazole substitué dont le radical de substitution comprend un groupement alcool OH⁻,
et dans lequel l'anion est un dérivé organique à la fois de tosilate et de sulfate.

Un tel composé montre une température de transition bas spin vers haut spin de l'ordre de 353K (80°C) à 368K (95°C), et une température de transition haut spin vers bas spin à environ 103K (-170°C).

Ce composé, tel qu'issu de sa préparation, et "vierge" de toute utilisation, est d'abord stocké à l'état bas spin où il est pourpre. Lors de sa "première utilisation", il est porté à une température supérieure ou égale à la température de transition haute vers 370K (97°C) où il prend l'état haut spin blanc. Ensuite, il faudrait le porter à une température de transition basse inférieure à 103K (-170°C) pour lui voir reprendre l'état bas spin pourpre, ce qui n'est pas à la portée du grand public. Lorsque ce composé est simplement ramené aux température usuelles qui se situent entre 223K et 323K (-50°C et +50°C), il est dans sa zone de bistabilité et il reste dans l'état haut spin blanc.

Ce composé montre en outre une propriété étonnante et intéressante. Lorsqu'après avoir pris l'état haut spin blanc, il est ramené, par des moyens spécifiques, à sa température de transition basse 103K (-170°C), il reprend l'état bas spin pourpre. Mais il ne peut être maintenu dans cet état bas spin pourpre que dans des conditions spécifiques qui ne sont pas à la portée du grand public. Et donc on ne peut pas lui redonner l'aspect "vierge" d'une manière simple.

En effet, ce composé possède la propriété de se déshydrater à la température 353K-368K (80-95°C) de transition haute, et donc de changer de structure. La température de transition basse du composé déshydraté blanc obtenu est 103K (-170°C) où il devient pourpre. Ensuite, ce nouveau composé déshydraté montre une température de transition haute à 108K (-165°C) où il redevient blanc. Donc, du fait du changement de structure par déshydratation lors de la "première utilisation", le composé ne peut plus ultérieurement être autrement qu'à l'état haut spin blanc à température ambiante, quel que soit le traitement qui lui est appliqué.

Ce composé peut donc être utilisé pour constituer un marqueur infalsifiable de passage dans une zone de température suffisante pour qu'il se déshydrate, par exemple de l'ordre de 353K (80°C).

Dans un exemple de mise en oeuvre
le métal est l'ion fer Fe²⁺ (configuration électronique en d6),
le ligand est un 4-(2'-hydroxyéthyl)-1,2,4 triazole,
l'anion est un 3-nitro-phénylsulfonate.

Ce composé a une température de transition haute à 368K (95°C), où il a la propriété de se déshydrater. Le composé déshydraté résultant a une température de transition basse à 103K (-170°C), puis une température de transition haute à 108K (-165°C).

Les propriétés de changement de phase du composé, avec changement du domaine du cycle d'hystérésis d'une telle grande ampleur, environ 260K, sont dues à la coopération du phénomène de transition de spin et de la déshydratation. Ces propriétés sont dues à la présence du groupe alcool sur le ligand et à la nature organique de l'anion.

Dans un autre exemple de mise en oeuvre, le métal est un alliage Fer-Zinc. La température de transition haute du composé obtenu est alors modulée entre 353K et 368K (80°C et 95°C) environ, en fonction du taux de zinc dans l'alliage. Les autres propriétés restent substantiellement inchangées.

L'invention est décrite en détail ci-après, en référence avec les figures schématiques annexées, dont :

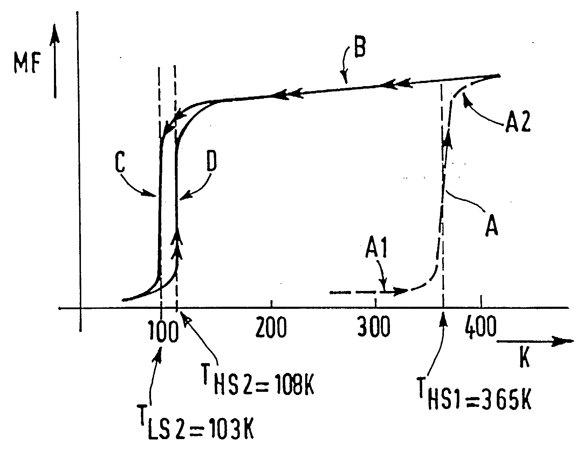

- la FIG.1 représente un cycle d'hystérésis d'un composé exemplifié.

### I- Formulation chimique des composés de départ sélectionnés selon l'invention

Selon l'invention, on décrit ci-après une sous-famille de composés sélectionnés parmi la famille générale des composés à transition de spin.

Comme les composés déjà connus de la famille générale, les composés de la sous-famille sélectionnée possèdent des propriétés de transition de spin induites **exclusivement thermiquement,** aussi bien pour l'état bas spin (LS) que pour l'état haut spin (HS). Ces transitions sont associées à un phénomène d'hystérésis entre l'état bas spin LS et haut spin HS.

Les composés de la sous-famille décrits ci-après montrent enfin, pour la première fois, des propriétés qui sont indispensables pour la réalisation industrielle à grande échelle et faible coût de systèmes infalsifiable de détection d'un premier usage ou de détection d'un passage à une température plus élevée que les températures dites usuelles définies comme étant dans l'intervalle 223K, 323K (-50°C, +50°C). Ces composés montrent une température de transition bas spin vers haut spin proche de la température d'évaporation de l'eau, et une température de transition haut spin vers bas spin de l'ordre de 103K (-170°C).

Pour montrer ces propriétés, néanmoins, ces composés sélectionnés doivent être préparés selon un mode de réalisation approprié, faute de quoi leurs propriétés intéressantes ne sont pas obtenues.

### Ia) Formulation générale

La sous-famille des composés chimiques à transition de spin sélectionnés selon l'invention comprend un réseau incluant des molécules constituées chacune d'un complexe métal-ligand et d'anions, et incluant en outre au moins une molécule d'eau par molécule du complexe métal-ligand.

### Ib) Le métal du complexe métal-ligand

La transition de spin des matériaux selon l'invention suppose l'existence de deux puits de potentiel, l'un correspondant à l'état bas spin LS, l'autre correspondant à l'état haut spin HS. Ces puits de potentiel sont séparés par une barrière de potentiel. Les parties inférieures des puits de potentiel correspondent respectivement à des niveaux d'énergie H_{LS} et H_{HS} différents séparés par une barrière de potentiel.

Par application d'une perturbation thermique à l'un des composés sélectionnés, d'abord placé dans l'état stable bas spin (LS), où les électrons sont piégés dans le premier puits de potentiel, des états haut spin excités non-stables sont induits, puis les électrons retombent via des transitions permises en suivant une voie de relaxation principale qui est celle du second puits de potentiel correspondant à un état haut spin (HS) stable. Les électrons restent piégés dans le second puits de potentiel correspondant à HS et ne retournent pas spontanément dans le premier puits de potentiel correspondant à LS. Pour retrouver cet état LS, il est nécessaire de refroidir le composé en deça de la température correspondant à l'état bas spin (LS). Un phénomène d'hystérésis est donc lié aux propriétés de transition de spin.

La figure 1 montre un tel cycle d'hystérésis. La fraction molaire MF de matériau ayant transité à une température T est portée en ordonnée et la température T en abscisse en degrés Kelvin.

Comme on l'a dit précédemment, les conditions thermodynamiques ont été choisies pour que les composés sélectionnés et exemplifiés montrent des propriétés particulières concernant leurs températures de transition de spin et leur domaine de bistabilité lié au phénomène d'hystérésis.

Les ions métalliques sélectionnés pour former les molécules du réseau sont ceux qui présentent une configuration électronique en d4, tels que Cr²⁺, Mn³⁺ ; en d5, tels que Mn²⁺, Fe³⁺ ; en d6 tels que Fe²⁺, CO³⁺ ; en d7, tel que CO²⁺, Ni³⁺, etc... La configuration électronique des ions métalliques peut être trouvée par exemple dans un Tableau de Classification Périodique des Eléments connu de l'homme du métier, tel que le Tableau de Classification Périodique des Eléments de Mendeleev.

On appelle ci-après S_{HS} la valeur de spin pour l'état haut spin et S_{LS} la valeur de spin pour l'état bas spin. La valeur de spin est une quantité connue de l'homme du métier et liée à la configuration électronique de l'ion métallique.

Il faut savoir que :
- plus la différence entre les valeurs de spin s_{HS} et s_{LS} est grande, et plus l'effet magnétique spectroscopique et structurel lié à la transition de spin est détectable. Ce qui est favorable à l'application envisagée selon l'invention.
- plus la différence entre ces valeurs de spin est petite, et plus la différence d'entropie ΔS est petite. Comme le terme ΔS intervient dans l'équation de Gibbs sous la forme -T.ΔS (moins T multiplié par ΔS), plus la différence d'entropie est petite et plus la température critique du phénomène de transition du spin augmente. Selon l'invention, il faut obtenir une température critique Tc pas trop basse par rapport à la température ambiante, de manière à obtenir une amplitude de la région de bistabilité s'étendant suffisamment au-dessus de la température ambiante d'une part, et suffisamment en-dessous d'autre part. Ceci est très difficile à obtenir car les matériaux à transition de spin connus jusqu'à ce jour montrent plutôt des températures critiques très en-dessous de la température ambiante avec une région de bistabilité très peu étendue.

On constate donc qu'il existe deux situations favorables, mais contradictoires, difficiles à mettre en oeuvre simultanément. C'est pourquoi on propose ci-après une sélection d'ions métalliques qui permettent d'arriver à un compromis entre ces deux situations parce qu'ils présentent à la fois :
- une différence entre les valeurs de spin s_{HS} et s_{LS}, suffisante pour obtenir des effets magnétiques détectables de manière appropriée,
- et une différence entre ces valeurs pas trop grande, de manière à ce que le domaine de bistabilité soit bien centré sur la zone de température requise fixée entre 225K et 323K (-50 et +50°C).

Tous les ions métalliques ayant une telle configuration électronique pourraient être utilisés pour former le complexe métal ligand.

On choisira de préférence :

**Fe**^{**2+**} qui a une configuration électronique en d6 et qui présente deux états de spin entre une valeur de spin :
S_{LS} = 0 où il est diamagnétique pour l'état bas spin,
et S_{HS} = 2 où il est paramagnétique pour l'état haut spin,

**Co**^{**2+**} qui a une configuration électronique en d7, qui présente une valeur de spin :
S_{LS} = 1/2 pour l'état bas spin,
S_{HS} = 3/2 pour l'état haut spin,

**Co**^{**3+**} qui a une configuration électronique en d6, et présente une valeur de spin :
S_{LS} = 0 pour l'état bas spin,
S_{HS} = 2 pour l'état haut spin

**Ni**^{**3+**} qui a une configuration électronique en d7, qui présente une valeur de spin :
S_{LS} = 1/2 pour l'état bas spin,
et S_{HS} = 3/2 pour l'état haut spin.
On a intérêt à sélectionner les ions métalliques qui présentent la transition la plus grande entre les deux états de spin, c'est-à-dire la différence la plus grande entre s_{LS} et s_{HS}, pour obtenir des effets magnétiques spectroscopiques et structurels suffisamment détectables.

Un cas particulier est celui de Fe³⁺. Cet ion métallique présente une configuration électronique en d5 et entre donc dans la catégorie des ions qui pourraient être utilisés. Ses états de spin varient entre s_{LS} = 1/2 et s_{HS} = 5/2, donc présentent un écart suffisant. Mais de nombreux chromophores de cet ion sont naturellement rouge, ce qui met leur bande d'absorption en coïncidence avec la bande d'absorption du composé de départ dans l'opération de transition de spin. Ce composé ne peut donc changer de couleur de manière significative et utile, lors de sa transition de spin.

La température de transition bas spin vers haut spin, appelée température haut spin T_{HS} peut être modulée en fonction d'un taux d'alliage du métal M induisant l'effet de transition de spin, avec un autre métal ne produisant pas cet effet, tel que le zinc Zn²⁺ par exemple.

### Ic) Les ligands du complexe métal-ligand

Il a été trouvé qu'en introduisant au moins un groupement alcool OH⁻ dans la structure d'un ou plusieurs ligands du composé, on pouvait contrôler le comportement de ce composé de manière particulièrement favorable à atteindre les buts de l'invention, et qui sera décrit plus loin en détail. Pour former les molécules, des ponts liants doivent être formés entre les noyaux métalliques. A cet effet, un complexe métal-ligand est formé dans lequel l'ion métallique est associé à au moins un ligand du type 1-2-4 triazole substitué, dont le radical de substitution comprend un groupement alcool OH⁻.

D'une manière générale, le complexe métal-ligand peut comprendre un ou plusieurs ligands triazole substitué de formule : 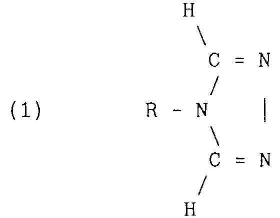 noté en abrégé R-trz
formule dans laquelle R est un radical alkyle Cₙ H₂ₙ₊₁, ou un radical aryle qui ont respectivement au moins un groupement de substitution formé par le groupement alcool OH⁻. Selon les valeurs du nombre entier n, on obtient des radicaux alkyles différents que l'on écrit ci-après R, R', R" etc, dont un ou plusieurs doivent contenir le groupement alcool OH⁻. Parmi les nombreux ligands triazoles ainsi substitués possibles, on retiendra particulièrement le ligand (4) : 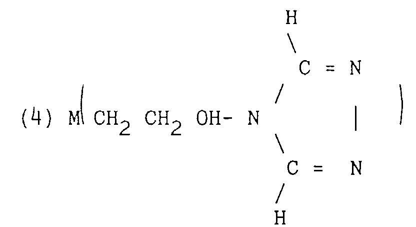 où M est un métal et où le ligand est noté en abrégé R-trz et où le radical R est un (2'- hydroxyethyl) de formule CH₂-CH₂-OH⁻

Le complexe métal-ligand peut comprendre aussi, outre au moins obligatoirement un ligand 1-2-4 triazole ainsi substitué par au moins un radical contenant un groupement alcool, en complément, un ou plusieurs ligands 1-2-4 triazoles autrement substitués entre autres par des radicaux amines.

Dans ce dernier cas, dans la formule (1) de ces 1-2-4 triazoles substitués 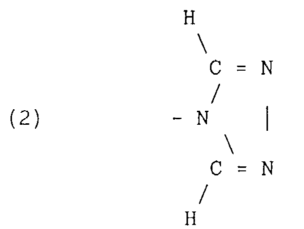 est le radical triazolate noté (trz⁻)
et R est un radical amine pour former le ligand amino-triazole recherché. Ce radical R amine a pour formule : 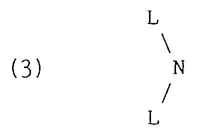 Dans cette formule du radical amine, L peut être un radical alkyle tel que :

(5) Cₙ H₂ₙ₊₁

où n est un nombre entier égal ou supérieur à zéro. Dans ce cas, ce radical alkyle peut aussi inclure un radical alcool OH⁻ de substitution.
De ce fait, la formule complète du ligand 1-2-4 amino-triazole est : 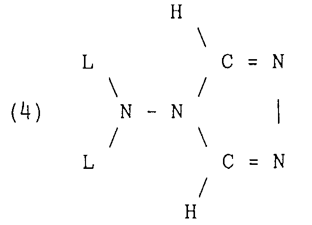 noté en abrégé L₂ N-trz
Parmi les nombreux ligands amino-triazoles possibles, on retiendra particulièrement le suivant : 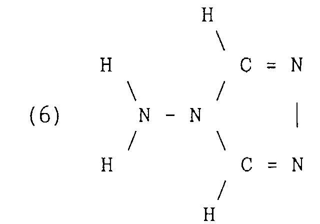 noté en abrégé H₂ N-trz
Il résulte de l'enseignement précédent que le complexe métal-ligand peut avoir aussi pour formules, où M est un métal déjà décrit :

(12) M [L₂ N-trz]₃₋ₓ [R-trz]ₓ où 0 ≤x ≤3

(13) M [L₂ N-trz]_{3-x-y} [R-trz]ₓ [R'-trz]_{y} où x + y ≤3

(14) M [L₂ N-trz]₂₋ₓ [R-trz]ₓ [trz⁻] où x ≤2

(14') M [L₂ N-Trz]_{3-x-y} [R-trz]ₓ [trz⁻]_{y} où x + y ≤3

où R est un radical alkyle ou un radical aryle substitué par au moins un groupement alcool OH⁻.

Selon l'ion métallique sélectionné, et selon le radical R à groupement OH⁻ choisi comme radical de substitution dans la formule des ligands triazoles substitués, de nombreuses combinaisons sont offertes pour former le complexe métal-ligands.

Néanmoins, ces combinaisons sont limitées par l'obligation d'inclure un groupement alcool OH⁻ dans le radical d'un des ligands, et par l'obligation de former le complexe métal-ligand avec un ion métallique ayant une combinaison électronique en d4, d5, d6 ou d7.

Il résulte de la soumission à ces obligations que les composés obtenus présentent deux propriétés qui coopèrent, la transition de spin et la présence d'eau, et qui sont déterminantes pour obtenir le comportement du composé.

### Id) Les anions des molécules

Les molécules du réseau, comportent, outre le complexe d'un ion métallique et d'un des ligands décrits plus haut, un anion qui est un dérivé organique à la fois de tosilate et de nitrate.

De préférence, cet anion organique comprend un radical sulfito SO⁻ ₃ et un radical nitreux NO₂ ⁻,

Parmi les anions organiques à radical sulfito et nitreux, on retiendra particulièrement les nitro-phényl-sulfonates où le radical sulfito (SO⁻ ₃) et le radical (NO₂ ⁻) nitreux sont liés à un radical cyclique du type benzénique ou à l'un de ses dérivés ;
parmi les nitro-phényl-sulfonates, on cite comme exemples :
∗ Le 3-nitro-phényl-sulfonate de formule :

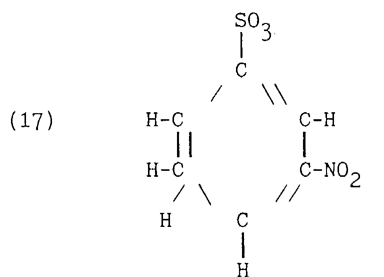

Parmi les anions sulforganiques à radical sulfito, on retiendra aussi les sulfito-aryles substitués ou le radical de substitution contient un radical nitreux NO₂ ⁻. Ainsi le radical sulfito SO₃ ⁻ est lié à un radical cyclique du type benzonique C₆H₅ ⁺ ou à l'un de ses dérivés substitués par un radical incluant NO₂ ⁻, Parmi les sulfito-aryles substitués on cite comme autres exemple :
∗ les sulfito-aryle substitués (O₃S)⁻ - C₆H₄ - R de formule : 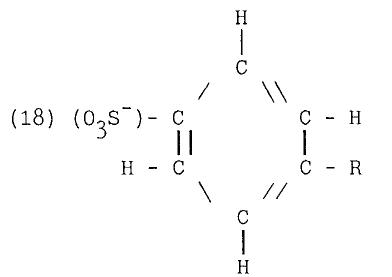 en abrégé (O₃S⁻) - Φ - R
   où R est le radical alkyle Cₙ H₂ₙ₊₁ (formule 5)
   où un H est substitué par un radical nitreux NO₂ ⁻
   dont la formule développée est alors la suivante : 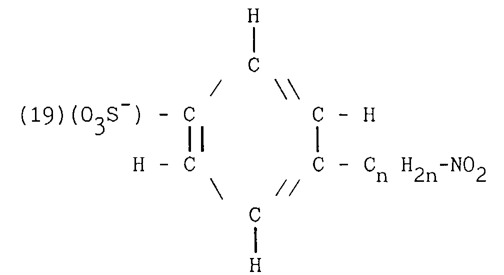
Parmi les sulfito-aryles substitués de formule (19) précédente, on peut aussi citer un composé où le radical OH⁻ de substitution vient prendre la place d'un H en position méta par rapport à SO₃ ⁻.

Un autre anion appelé tosylate (en abrégé tos) peut être formé à partir du radical tosyl SO₂ - C₆H₄ - CH₄ qui est un sulfitométhyl-benzène où le radical méthyl est en position para. Il a pour formule abrégée :

(SO⁻ ₃) - Φ - CH₃

Il peut être utilisé s'il est substitué par un radical nitreux comme déjà décrit : 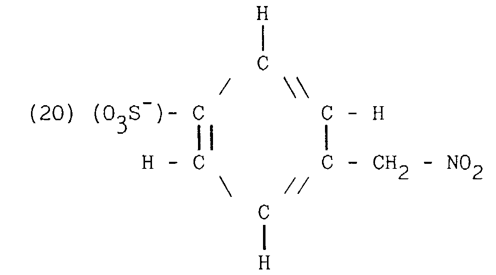 Dans une variante un H du radical cyclique est substitué par NO₂ ⁻
∗ Les sulfito-aryle ayant au moins un radical benzénique supplémentaire Φ', dans lequel le radical Φ' comprend un radical NO₂ ⁻ ou dans lequel un H est substitué par NO₂ ⁻ : 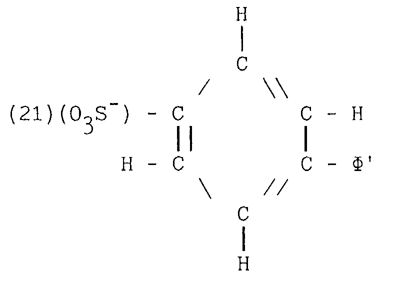
Avec cette formule, on cite : la sulfito-quinone ou le sulfito-polybenzène 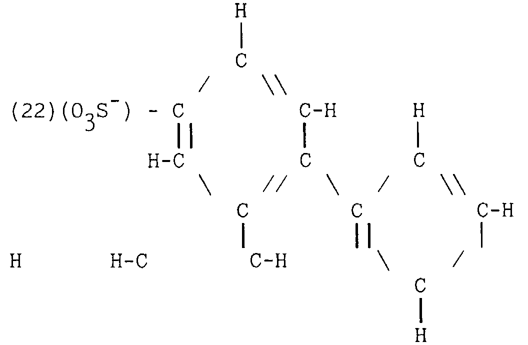 où les radicaux benzéniques supplémentaires peuvent être plus nombreux que 2,
et dans lesquels un ou plusieurs H sont substitués par NO₂ ⁻.
Parmi les sulfito-aryle ayant un radical benzénique supplémentaire, on cite aussi le sulfito-naphtalène avec le radical sulfito en position métha : 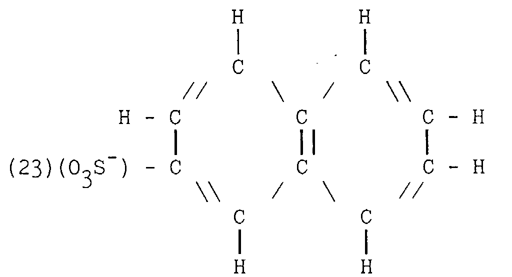 Parmi les anions sulforganiques à radical sulfito, on retiendra également particulièrement :
∗ les sulfito-alkyles (SO⁻ ₃)-R, où le radical sulfito (SO₃ ⁻) est lié à un radical alkyle R formant une chaîne saturée ou insaturée selon la formule (5). Parmi les sulfito-alkyle on cite comme exemples :

   (24) (O₃S⁻) ) - CH₃ le sulfito-méthyl

   (25) (O₃S⁻) - CH₂ - CH₃

   le sulfito-éthyl, radical où on substitue un ou plusieurs H par le radical nitreux NO₂ ⁻.
Dans les composés obtenus, la nature organique de l'anion coopère avec la présence d'un groupe alcool OH⁻. Sur le ligand pour influer sur l'ampleur des effets du comportement desdits composés.

Pour former les anions du composé, on réalisera favorablement des alliages d'anions organiques incluant au moins un radical sulfito et nitreux comme décrit plus haut avec des anions minéraux tels que BF₄ ⁻, ClO₄ ⁻, Cl⁻, CO₃ ²⁻, Br⁻ et spécialement NO₃ ⁻.

### Ie) La formulation des molécules

On présente ci-après une formulation simple de composés de départ entrant dans la sous-famille sélectionnée selon l'invention.
∗ Molécule formée du complexe de l'ion métallique Fe²⁺ et du ligand 4-(2'-hydroxyéthyl)-1,2,4 triazole (he-trz), avec un anion A=3-nitrophénylsulfonate

(29) Fe²⁺ (he-trz)₃ (A⁻)₂

dont la formule développée est : 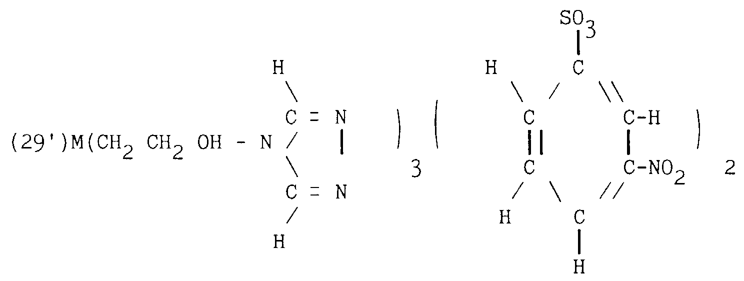 où M est dans cet exemple le fer Fe²⁺.

### If) Construction du réseau

On a cité plus haut que le terme d'entropie TΔS impliquait la participation d'un terme dû au réseau. Ce terme de réseau résulte quant à lui de la participation d'un terme de désordre thermique qui est une fonction de la température T, et d'un terme de structure ou d'ordre. Par exemple, un composé présentant des ponts liants entre noyaux métalliques impliquera l'existence d'un facteur d'ordre à courte distance.

Pour présenter une bonne coopérativité entre molécules, c'est-à-dire des transitions de spin franches et nettes, dans lesquelles toutes les molécules transitent à la fois, ou bien aucune ne transite, le composé doit donc comporter des liaisons entre les complexes ions métalliques-ligands.

Ainsi, plus la coopérativité, dans un complexe, est grande, plus l'effet retard est grand, et plus l'amplitude ΔT d'hystérésis sera importante. La coopérativité des molécules est augmentée par la présence de molécules d'eau, à raison d'au moins 1 molécule d'eau par molécule du complexe de l'ion métallique. Ces molécules d'eau se placent dans le réseau uniquement liées par liaison du type hydrogène au ligand aminotriazole. Ces molécules d'eau ne sont pas liées par liaison covalente. Elles agissent sur la force de liaison inter-moléculaire. Selon l'invention, l'eau d'hydratation présente dans le réseau provient de l'hydratation du sel du métal, et particulièrement du sel de fer dans l'exemple préférentiel. A cet effet, comme on le montre plus loin, le composé est préparé en utilisant des solvants protiques (solvants ayant un groupement alcoolique OH⁻) qui permettent d'obtenir des composés à l'état bas spin contenant des molécules du solvant dans le réseau.

Le composé à transition de spin a donc selon le complexe métal-ligands choisi, et selon l'anion choisi, de nombreuses formulations possibles. A titre d'exemple, on présente ci-après une formulation préférentielle :
∗ Réseau correspondant à la molécule (29') précédemment décrite

   (31) Fe²⁺ (he-trz)₃ (A⁻)₂, 3H₂ O

   où he-trz est le ligand 4-(2'hydroxyéthyl)-1,2,4 triazole) et où A est l'anion 3-nitro-phényl-sulfonate.:

**L'effet étonnant trouvé** selon l'invention est que ce composé présente plusieurs phases qui sont caractérisées par le contenu en molécules du solvant protique restant dans le composé. Ce contenu en solvant protique permet de contrôler les températures de transition d'état haut spin vers bas spin et d'état bas spin vers haut spin du composé. Les variations du contenu en solvant protique induisent des phases différentes du composé qui montrent des températures de transition de spin différentes et appropriées à l'application envisagée.

### II/ Procédé de réalisation des composés de départ

A titre d'exemple, pour réaliser le composé ayant un réseau (31) précédemment décrit :

(31) Fe²⁺ (he-trz)₃ (A⁻)₂, 3H₂O,

on effectue un mélange des proportions stoechiométriques (1/3) de :
∗ n moles du précurseur du noyau du composé selon l'invention, c'est-à-dire n moles formées de l'ion fer Fe²⁺ liées au contre-ion (A⁻) selon la formule :

   (33) n Fe²⁺ (A⁻)₂, 6 H₂O

   appelé 3-nitro-phénylsulfonate de fer (II) utilisé dans une solution de méthanol CH₃-OH ;
∗ et de 3n moles de he-trz appelé 4-(2'hydroxyéthyl)-1,2,4-triazole (He-trz) dans une solution de méthanol CH₃-OH.

Ce mélange est effectué à température ambiante, de l'ordre de 293 à 300 K. Dans ce procédé de réalisation, n est un nombre supérieur à zéro.

On peut préparer le composé favorablement en présence d'autres molécules de solvant protique, tel que l'éthanol, l'eau ou un mélange de ces molécules.

Un composé de formule :

(31) Fe²⁺ (he₂-trz)₃ (A⁻)₂, 3H₂O

précipite rapidement.

Dès que le précipité est obtenu, le solvant est éliminé par filtrage pour obtenir le composé.

Le composé (31) est obtenu sous une forme pulvérulente, dans l'état bas spin de couleur pourpre. Ce composé est appelé "composé hydraté vierge".

Il faut noter que les composés obtenus à l'état bas spin contiennent encore des molécules du solvant protique dans le réseau. Il en résulte que la température de transition haute T_{HS} dépend fortement de la nature du solvant, et que, par le choix du ou des solvants, on peut agir sur la valeur de cette température de transition haute.

### III - Propriétés générales des composés à transition de spin de la sous-famille sélectionnée selon l'invention

La FIG.1 montre des courbes de cycles d'hystérésis du composé de formule chimique (31) tel qu'obtenu directement par le procédé décrit plus haut. Ce composé est pris ci-après comme exemple. Ce composé est hydraté et se trouve dans un état bas spin de couleur pourpre à température ambiante.

La fraction molaire MF de matériau ayant transité à une température T est portée en ordonnée et la température T (en degrés Kelvin) est portée en abscisse.

La courbe de la FIG.1 montre que ce composé a une branche A d'un cycle d'hystérésis partant de la partie A1 à température ambiante où le composé est à l'état bas spin, et allant vers la partie A2 lorsque l'on monte en température pour atteindre la température de transition haut spin vers bas spin qui est à T_{HS} ≃ 365K (92°C).

En correspondance avec cette partie de courbe A₂ où l'on chauffe le composé à une température T telle que T_{HS} ≤ T, c'est-à-dire 365 K < T, il devient blanc, car il prend l'état haut spin.

Ensuite, lorqu'on ramène le composé à la température ambiante T_{R} ≃ 293K à 300K, il reste blanc car il se trouve dans la zone de bistabilité B où l'état haut spin est stable indéfiniment car T_{LS} < T_{R} pour ce composé.

Lorsque maintenant on refroidi le composé à une température inférieure à la température de transition bas spin vers haut spin T_{LS}, c'est-à-dire T ≤ 103K (-170°C), selon la partie de courbe C, ce composé redevient pourpre car il passe à nouveau à un état bas spin.

Mais, une fois qu'il a été refroidi au-dessous de T_{LS}, lorsqu'on augmente sa température, le composé reprend la couleur blanche correspondant à un état haut spin dès que la température de 108K (-165°C) est atteinte, selon la partie D de la courbe de la FIG.1.

Ce composé ne peut plus maintenant montrer une autre couleur que blanche lorsqu'il se trouve à température ambiante.

Ce phénomène s'explique de la façon suivante :

Le composé d'origine appelé hydraté vierge N°1 possède la propriété de se déshydrater à la température T_{HS1} 80-95°C de transition haute, et donc de changer de structure. La température T_{LS2} de transition basse du nouveau composé déshydraté blanc obtenu, appelé composé déshydraté N°2, est 103K (-170°C) où il devient pourpre. Ensuite, ce composé déshydraté N°2 montre une température de transition haute à T_{HS2} = 108K (-165°C) où il redevient blanc. Donc, du fait du changement de structure par déshydratation lors de la "première utilisation", le composé N°2 ne peut jamais reprendre la structure du composé N°1 et donc ne peut plus ultérieurement être autrement qu'à l'état haut spin blanc à température ambiante, quel que soit le traitement qui lui est appliqué, puisque chaque fois qu'il est porté à une température supérieure à sa température T_{HS2} ≃ 108K il devient blanc.

Cette propriété est utilisée pour réaliser à l'aide du composé N°1 un marqueur infalsifiable de première utilisation, ou de passage dans une zone de température suffisante pour que ce composé N°1 se déshydrate et prenne la structure du composé n°2. Cette température est de l'ordre de 353K à 373K (80 à 100°C) et dépend fortement de la nature du ou des solvants protiques utilisés dans le procédé de préparation du composé n°1.

Dans l'application à la réalisation d'un marqueur infalsifiable de première utilisation, ce composé N°1, tel qu'issu de sa préparation, et "vierge" de toute utilisation, est d'abord stocké à l'état bas spin où il est pourpre. Lors de sa "première utilisation", il est porté à une température supérieure ou égale à la température de transition haute entre 353K et 373K (80 et 100°C) où il prend l'état haut spin blanc. Ensuite, en tant que composé N°2, il faudrait le porter à une température de transition basse inférieure à 103K (-170°C) pour lui voir reprendre l'état bas spin pourpre, ce qui n'est pas à la portée du grand public. Lorsque ce composé est simplement ramené aux température usuelles qui se situent entre 223K et 323K (-50°C et +50°C), il est dans sa zone de bistabilité et il reste dans l'état haut spin blanc.

Ce composé forme un marqueur infalsifiable pour la raison suivante : lorsqu'après avoir pris l'état haut spin blanc, il est ramené, par des moyens spécifiques, non à la portée du grand public à la température de transition basse 103K (-170°C) du composé N°2, il reprend l'état bas spin pourpre. Mais il ne peut être maintenu dans cet état bas spin pourpre que dans des conditions spécifiques qui ne sont pas à la portée du grand public puisque sa température haut spin est très proche à 108K (-165°C). La zone de bistabilité du composé N°2 se trouve entre 103K et 108K (-170°C et -165°C), et c'est seulement dans cette zone que le composé est pourpre et semble redevenu "vierge" d'une manière simple.

### IV - Dispositif d'affichage de dépassement de seuil de température

Un dispositif de test de dépassement d'un seuil de température prédéterminé, de l'ordre de 80 à 100°C, peut être réalisé comme il suit :

Un milieu actif comportant un composé hydraté vierge N°1 est réalisé par exemple sous forme de film sérigraphié sur un support qui peut être en tout matériau supportant ladite température prédéterminée.

Le composé hydraté vierge N°1 n'est pas enrobé dans un composé étanche, de manière à pouvoir se déshydrater comme il est souhaité, sous l'action d'une montée en température.

Ce dispositif de test peut être associé à un système chauffant, (résistif ou autre), réalisé sous forme de module indépendant.

### V - Procédé d'utilisation du dispositif de test

### EXEMPLE I

Ce dispositif de test peut être appliqué à l'indication de virginité d'un système de jetons, par exemple les jetons décrémentables à chaque utilisation tels que portés par les cartes téléphoniques, carte de paiement etc. En effet, actuellement, la seule indication de virginité de telles cartes est constituée par un emballage, qui est finalement jeté, donc inutile et coûteux. Dans le procédé d'utilisation de ce dispositif de test en coopération avec l'utilisation des jetons, le dispositif de test peut être réalisé sur une zone imprimée sur le support des jetons. Au premier jeton utilisé, la zone imprimée qui est préalablement pourpre est chauffée localement en utilisant un module de chauffage tel que cité précédemment, ce module agissant en coopération avec le système de décrémentation des jetons.

Cette zone imprimée passe alors au blanc. Le retour à la couleur pourpre n'étant pas réalisable dans une fourchette de températures communes, la carte garde la trace qu'elle a été utilisée au moins une fois. La fonction de la zone imprimée est celle d'un marqueur infalsifiable.

### EXEMPLE II

Ce dispositif de test peut être appliqué aussi à la détection d'une température de stockage accidentellement élevée pour des produits sensibles aux températures un peu élevées de l'ordre de 80°C, et particulièrement inflammables. Dans ce cas aucun module de chauffage n'est utilisé. Le dispositif de test, placé sur un emballage ou dans un van de transport, ou dans des bâtiments de stockage, ou a proximité de machines ou d'engins, permet de détecté qu'un seuil de rupture d'une chaîne de température permise a été rompue au moins une fois.

## Revendications

1. Composé chimique à transition de spin, incluant un réseau comprenant des molécules formées chacune d'un complexe métal-ligand et d'au moins un anion, et ce réseau comprenant aussi au moins une molécule d'eau liée au ligand par liaison hydrogène, dans lequel le métal est constitué par au moins un ion métallique ayant une configuration électronique en d4, d5, d6 ou d7, dans lequel le ligand est un 1,2,4 triazole substitué ayant un radical de substitution qui comprend un groupement alcool OH⁻, et dans lequel l'anion est un dérivé organique à la fois de tosilate et de nitrate.

2. Composé selon la revendication 1, dans lequel l'ion métallique est le fer Fe²⁺ (FeII) ayant une configuration électronique en d6.

3. Composé selon la revendication 1, dans lequel le métal est un alliage de l'ion métallique fer Fe²⁺ (FeII) et de l'ion zinc Zn²⁺.

4. Composé selon l'une des revendications 1 à 3, dans lequel le ligand est un 4-(2'-hydroxyéthyl)-1,2,4 triazole.

5. Composé selon l'une des revendications 1 à 4, dans lequel l'anion est un 3-nitro-phényl-sulfonate.

6. Composé selon l'une des revendications 1 à 4, dans lequel l'anion organique comprend un radical sulfito SO₃ ⁻ et un radical nitreux NO₂ ⁻.

7. Composé selon la revendication 6, dans lequel l'anion organique est un 3-nitro-phényl-sulfonate.

8. Composé selon l'une des revendications 1 à 7, dans lequel l'anion organique est allié à un anion minéral choisi parmi NO₃ ⁻, BF₄ ⁻, Cl⁻, ClO₄ ⁻, Br⁻, et CO₃ ²⁻, ou à plusieurs de ces anions.

9. Procédé de réalisation d'un composé conforme à la revendication 7, selon lequel le composé est synthétisé à température ambiante par un mélange en proportions stoechiométriques (1/3) respectivement d'une solution protique de trinitrophyénylsulfonate de fer (II) à une solution protique de 4-(2'hydroxy-éthyl)-1,2,4 triazole puis élimination du solvant par filtrage, ce procédé fournissant le composé sous forme pulvérulente et à l'état bas spin de couleur pourpre.

10. Procédé selon la revendication 9, dans lequel le solvant protique est le méthanol, ou l'éthanol, ou l'eau, ou un mélange de ces solvants.

11. Dispositif d'affichage de dépassement d'un seuil de température, comprenant un premier système appelé écran formé d'un milieu actif inscriptible et non réeffaçable associé à un support pour former un marqueur infalsifiable, ce milieu actif comprenant un composé en poudre ou un mélange de composés en poudre, conforme(s) à l'une des revendications 1 à 8.

12. Dispositif selon la revendication 11, dans lequel pour former le milieu actif, le composé, ou le mélange de composés, est appliqué en une ou plusieurs couches sur un support.

13. Dispositif selon l'une des revendications 11 ou 12, comprenant un second système appelé système d'adressage chauffant qui coopère avec l'écran pour porter, sur commande, la température desdites zones d'affichage à une température égale ou supérieure à la température de transition haut spin vers bas spin du ou des composés de l'écran.

14. Dispositif selon la revendication 13, où l'écran et le système d'adressage chauffant sont des modules soit solidaires, soit désolidarisables, soit séparés et associables.

15. Carte à mémoire et/ou microprocesseur incluant un écran intégré et coopérant avec un système d'adressage chauffant séparé et associable selon la revendication 14.
